# EUROPEAN PATENT SPECIFICATION

(11) **EP 1 827 945 B1**
(45) Date of publication and mention of the grant of the patent: **13.10.2010**
(21) Application number: 05825335.2
(22) Date of filing: 22.12.2005
(51) Int. Cl.: B62B 1/12

(54) **DEVICE FOR LIFTING AND TRANSPORTING LOADS**
VORRICHTUNG ZUM ANHEBEN UND TRANSPORTIEREN VON LASTEN
DISPOSITIF POUR SOULEVER ET TRANSPORTER DES CHARGES

(30) Priority: 22.12.2004 BE 200400629
(43) Date of publication of application: 05.09.2007
(73) Proprietor: Heylen, Jos, 2440 Geel (BE)
(72) Inventor: Heylen, Jos, 2440 Geel (BE)
(74) Representative: Bleukx, Lucas Lodewijk M.
(86) International application number: PCT/EP2005/057137
(87) International publication number: WO 2006/067228

(56) References cited:
- DE-U1- 29 718 552
- US-A- 1 201 957
- US-A- 2 710 106
- US-A- 4 762 333
- US-A- 6 050 577
- US-A- 6 059 515

## Description

### Technical field

The present invention relates to a device for lifting and transporting loads, as described in the preamble of claim 1.

Such a device is known from US 2710106.

More particularly, the invention relates to a device comprising a support member, a wheel axle or axles connected to the support member possibly by means of first connecting means, provided with wheels on which the device is movable, a lifting member connected at the front for lifting the load, and a handling member connected at the back for manipulating the device.

### Background art

There are many different situations in which loads of a given size need to be released, lifted and moved. Such a situation for example occurs in warehouses where incoming goods are to be moved to their possibly temporary storage location, or are to be removed therefrom. A different situation occurs in gardens, on golf terrains, building sites, and such, where shrubs, trees, other plantation but possibly also other elements, such as for example subterranean storage means, are to be dug out, transported and subsequently may need to be planted or put away on a different location. Particularly in situations where there is not too much space, it is important to provide a suitable device for this which does not take up too much space, which can be easily and preferably manually operated and manipulated, but which is nonetheless capable of lifting and transporting loads of a given size and weight.

According to the prior art, a handcart type device is used for lifting and moving loads. Such a device has a support construction provided with wheels and with a lifting member at the front, generally in the form of a relatively flat plate, and with a handling member at the back, generally a fixed lever provided with a handle. Devices of this type are described in DE-U-29718552, US-A-1201957, US-A-4762333 and US-A-6059515. The ones described in US-A-1201957 and US-A-4762333 have movably mounted wheels whose position can be adjusted in function of the centre of gravity of the load which is transported.

A known device of a similar type is described in US-A-6050577. This device comprises a wheeled support frame for supporting loads to be transported, with a movably mounted toothed member at the front and a telescopic handling member at the back. The toothed member is provided for piercing and picking up relatively lightweight baled material.

These known devices have the disadvantage that only relatively small loads can be lifted and/or dug out and/or transported, and that it is not possible to easily lever loads free.

For lifting and moving loads of larger sizes and weights, use is made in the art of a motorized device such as a hand truck or a fork-lift truck. Such a device has a support construction provided with wheels and with a lifting member at the front and/or at the back, generally in the form of at least one relatively flat plate. The lifting member is hydraulically manipulated so that heavier loads can be lifted and transported.

The known device of this type however has the disadvantage that, because of its size and weight, only easily accessible places can be reached. It is therefore unsuitable for relatively small spaces.

### Disclosure of the invention

It is an aim of the present invention to provide a device for lifting and transporting loads which amongst others does not show the above mentioned disadvantages, which is thus capable to lift and transport relatively large and heavy loads preferably by means of muscle power only.

The device according to the invention comprises a support member, a wheel axle connected to the support member by means of first connecting means and being provided with wheels on which the device is movable, a lifting member connected to the front of the support member for lifting the load and a handling member connected to the back of the support member for manipulating the device. The first connecting means enable the wheel axle to be moved with respect to the support member between an upper position in which the wheel axle extends above the plane of the lifting member and at least one lower position, below the upper position. The first connecting means comprise first locking means for locking the wheel axle in the upper and lower positions. The device according to the invention is **characterised in that** in the lower position the wheel axle extends below the plane of the lifting member. This means that in this lower position, the wheels are mostly located below the plane of the lifting member.

As a result of the possibility to lock the wheel axle, and thus the wheels in upper and lower positions respectively above and below the plane of the lifting member, the act of lifting the load can be broken down into three partial acts as follows. First, the wheels are put in the upper position and the lifting member is brought underneath the load as will be set forth below. Subsequently, the whole device is tilted forwards, i.e. towards the load, using the front end of the lifting member as support point, thereby creating a space underneath the support member as a result of which the wheels can be moved to the lower position. Subsequently, the wheels are locked in the lower position and the device is tilted backwards again, thereby lifting the load on a different support point as in the first partial act. The braking down of the lifting operation into these steps has the advantage that apparently heavier and larger loads can be lifted than with the devices known from the prior art, amongst others because three partial acts are less exhaustive than a single lifting operation, in which the whole weight has to be lifted at once, and because the movement of the wheels from the upper to the lower position lengthens the lever arm and reduces the lever force needed to lift the load.

The fact that the lifting member mainly extends in a plane is not intended to mean that the lifting member essentially has a flat shape. The lifting member may for example also be curved, as is the case in one of the embodiments described below. The plane in which the lifting member mainly extends can be seen as the plane which connects the front end of the lifting member to its connection with the support member.

In a preferred embodiment of the device of the invention, the wheel axle is located more towards the front of the lifting member in the lower position than in the upper position. This has the advantage that the movement of the wheels from the upper position to the lower position not only lengthens the lever arm, but also shortens the load arm during the lifting operation, which can further reduce the lever force needed to lift the load.

In another preferred embodiment of the device of the invention, the handling member is connected to the support member by second connecting means with second locking means, which enable rotation of the handling member around a substantially horizontal second axle extending in transverse direction of the support member and locking it in a number of angular positions, whereby each time a substantially rigid connection is created between handling member and support member. By providing locking means which can lock the handling member in different angular positions, it is achieved that the lifting device of the invention can be adapted to the specific goal of the partial act in use at that moment. For example upon lifting a load a first partial act is to slide the lifting member, for example a substantially flat plate, underneath the load to be lifted and moved, upon which the lifting member will be more or less in a horizontal position (substantially parallel to the ground plane). With the known handcart a sometimes substantial horizontal (pushing and/or lifting) force has to be exerted to slide the lifting member underneath the load. If the handling member is oriented substantially vertically in this partial act (forming an angle of about 90° with the plane of the lifting member), then the user will have to use feet and legs to realize the necessary (pushing) force. In this unstable position, the (pushing) force which can be developed is by definition very limited. According to this embodiment of the invention, the handling member can be locked beforehand in a position in which the plane of the handling member is substantially in line with, or forms a smaller angle with the plane of the lifting member, so that a much larger (pushing) force can be developed, possibly without having to use feet and legs, which facilitates the placement of the lifting member underneath large and heavy weights.

As used herein, the lifting of loads amongst others means the digging out of loads, such as shrubs, trees, poles, and other vegetation or fixed elements, the shoveling up of loads, such as for example grit, sand and such, the lifting and/or jacking up of loads such as for example pallets, bales, bagged and other goods, hay, straw, heavy flower boxes and other boxes, etc.

The lifting member of the device according to the invention can be freely chosen, depending on the specific load which needs to be moved. In this way it is possible to carry out the lifting member in the form of a more or less flat plate, bent or not, rounded or not, sharpened and/or toothed or not, provided with a support and/or collecting unit, possibly with sides, a digging tool, a shovel, a framework, a fork with wings, a fork with teeth, and so on.

For digging out vegetation, shrubs, trees and such, preferably use is made of a fork-shaped lifting member, which mainly comprises a crossbeam, provided with a number of parallel pens and/or teeth. The pens and/or teeth can be slightly bent if desired, and their number, length, and further dimensions can be chosen depending on the load which has to be dug out.

Otherwise, Z-shaped teeth can be used. Such a Z-tooth is not straight, but shows a relatively strong curvature in longitudinal direction of the tooth, considered over a relatively short distance from the anchoring point in the support member, after which it extends substantially straight up to the free end. Upon rotating such a Z-tooth around its anchoring point in the support member, the free end of the tooth will be offset towards the left or the right, as a result of which the distance to the free ends of adjacent Z-teeth is enlarged and/or reduced. In this way, by a simple rotation of the Z-teeth around their respective anchoring points in the support member, it is possible to widen or reduce the fictitious total bearing plane of the teeth structure. It is also possible, by means of such a rotation, to lift or lower the bearing plane, resp. to rotate the Z-teeth with their curvature downwards, resp. upwards. The normal position of these Z-teeth is with their curvature downwards. It is also possible to give the bearing plane itself a curve by fixing the Z-teeth each in a different position. For example a sideways ascending or descending bowl structure can be achieved.

The desired position of the Z-teeth will depend on the specific use of the device of the invention, some more positions being more suitable for digging out and others for lifting and/or putting down an object. A combination of straight teeth and the above described Z-teeth is also possible. Use can also be made of slightly curved teeth which then form a bowl structure so that a unit or load which has to be pulled from the ground more experiences a force which moves it towards the support member with respect to a straight tooth structure.

In order to prevent blockage of the teeth as a result of for example corrosion, it is beneficial to slide a thin-walled sleeve of a different material composition (steel or iron with a copper sleeve are suitable) over the anchoring part of the tooth at the height of the contact plane with the support member.

If desired the teeth can be provided with a blocking means at the height of their anchoring in the support member to stop their rotation around the axial axis. For example in order to prevent undesirable changes in the positions of the teeth as a result of any force the anchoring can be provided by at least one cross-pen, and/or a construction in or on the respective tooth, which can in turn be included in a system of sideways blocking pens fixed in the support member. In order to improve the stability of the teeth or other parts of the lifting member, the end which is fixed to the support member can be provided with screw-thread and/or pen holes or other constructions, or can be triangular or multi-angular or round, with a corresponding recess or opening in the support member or in a corresponding intermediate structure for fixing the lifting member to the support structure, for example a quick-lock frame which may be anchored on the support member.

It should be noted that upon selecting the teeth unit a different length for each tooth can be taken into account. For example, it can be advantageous that the middle tooth or teeth is/are longer than the outer ones, a.o. upon digging out of tree-like vegetation with a root structure in the form of an inverted cone. The outer teeth, upon using Z-shaped teeth, preferably have an elevated position with respect to the middle tooth or teeth, so that a somewhat round tooth positioning or sideways bowl position is achieved.

The support member of the device of the invention can be each construction which is capable of lifting and moving load. It is clear that its specific form amongst others depends on the lifting member. For example, the support member can be a quick-lock frame, which is known in the art. The support member can also be plate-shaped or beam-shaped, and/or form a timbered or caged construction. The support member can be preferably carried out such that it comprises a beam-shaped support beam of which the axis extends substantially parallel to the wheel axle and the ground, and which can in a certain position of the wheel axle (as described below) make contact with the ground. Preferably the support beam also functions as the cross-beam, to which then the teeth and/or pens of the fork-shaped or other lifting member can be fixed.

The handling member of the device of the invention is used to manipulate the device. It is usually, though not necessarily, made up of a number of bars, possibly with cross bracings, and preferably provided with at least one handle. In its simplest form, the handling member comprises a single bar, at the end of which preferably a handle is provided. The handling member is connected to the support member by means of second connecting means. Possibly, the handling member can be provided to receive a further extension in the form of an additional bar or another aid for facilitating the application of force. According to a preferred embodiment of the invention, the handling member can be rotated around a substantially horizontal second axle of the support member, or built in and/or on it, and locked in a number of angular positions upon which each time a substantially rigid connection is created between the handling member and the support member. In the different angular positions, the handling member encloses an angle with the plane of the lifting member, which can vary between about 0° (in this position the handling member is more or less in the plane and on top of the lifting member), via 90° (in which the handling member is about perpendicular to the plane of the lifting member), via the in between degrees (in which the handling member is substantially in extension of the lifting member at 180°), up to about 270°. Depending on the goal of the specific partial act which needs to be performed, the most suitable position between 0° and 270° can be chosen. When the device is for example used for digging out a large rhododendron-shrub, or other tree structure, upon penetration of the lifting member (possibly in this case a fork with teeth) the handling member is placed in a "penetration position", i.e. a position suitable for pushing the lifting member to penetrate into the ground underneath the shrub, in which the angle is for example about 90° to 180° or more. Next, the shrub needs to be levered free. To this end the handling member is locked in a position which corresponds to an angle, which can lie between broad boundaries, for example between about 30° and 270°, in order to be able to exert the desired levering force. In order to make sure that substantial levering forces can be developed, preferably use is made of a telescopic handling member, with which the length of the load-arm can be increased by extending a first part of the handling member, which is at least partly received in a second part of the handling member enclosing the first part, and/or a subsequent part and/or subsequent parts. Once the shrub is levered free a different position can be chosen for the handling member if desired, for example at an angle between 30° and 270°.

Preferably the device of the invention is **characterized in that** the second connecting means comprise a plate or plates and/or a metal construction or other construction which extends in a plane substantially perpendicular to the horizontal second axle of the support member, which is provided with circumferential grooves and/or holes and/or recesses and/or construction on which the handling member can rest, the circumferential grooves and/or holes and/or recesses and/or construction corresponding to a number of angular positions of the handling member, and in that the handling member is provided with a plate and/or pen and/or bolt which can be accommodated in the circumferential grooves and/or holes and/or recesses and/or construction, or with a commonly available blocking, clamping or closing element which can possibly be accommodated in the grooves and/or holes and/or recesses and/or construction by means of the operation of a pull- or push-spring between the handling member and the plate, pen, bolt or construction.

Such a preferred embodiment is very easily adjustable to the most suitable configuration for the respective partial act.

A blocking mechanism of the handling member, which can be movable upwards and downwards by means of sliding grooves in the handling member in the form of a plate and/or pen and/or bolt and/or other construction (e.g. hinge), possibly on the sides of the handling member, either operated by hand or by foot and/or by means of a handle and/or cable and/or other commonly available element, can be located at the second connecting means, more particularly between this second connecting means and a construction on the handling member by means of a plate and/or pen and/or bolt and/or other construction (e.g. hinge, clamping element), possibly strengthened by a pull- and/or push-spring - or other forms of springs or other commonly available construction with a similar function, fixed to a construction on the blocking mechanism. This can for example be carried out by means of a more straight eclipse recess in the handling member at the pivot point, with a transverse pen at the circumferential grooves, recesses and/or other construction of the plate or plates and/or other construction on the support member, with one blocking element or more. A concave or convex ratchet blocking system above, below and/or sideways from the plate, plates or other construction as described above, fixed to the support member is another possible embodiment here. This ratchet blocking system, operating in two directions with possibly a blocking pen, rod, plate or other commonly available element, can possibly be fully enclosed in the structure of the handling member.

For example, a telescopic handle, which can be circular or non-circular in profile, can be used along the telescopic handling member for operating the mentioned blocking mechanism (e.g. hinge plate), so that the operation can take place at the handle.

Such an embodiment is also very easily adjustable to the most suitable configuration for the respective partial act.

It is furthermore very advantageous to characterize the device of the invention in that the first connecting means (between support member and wheel axle) comprise locking means, which make it possible to rotate the wheel axle around a substantially horizontal first axis of the support member and lock it in a number of angular positions, upon which each time a substantially rigid connection is created between wheel axle and support member. The contact between the first axle and the support member is thus adjustable and/or movable, for example in height direction and/or longitudinal direction.

In this way it is achieved that the lifting device of the invention can be further adapted to the specific goal of the partial act at a given moment, as a result of which it is possible to lift even heavier loads. In particular, by providing these locking means which enable locking of the wheel axle (provided with wheels) in different angular positions with respect to the rotation point (or points) it is achieved that the wheels can be located at different heights and/or positions. For example, it is possible that the wheels and/or the first axle are located in a first angular position partly or wholly behind and/or above the support beam of the support member, as a result of which the device mainly contacts the ground by means of the support beam. Furthermore it is possible that the wheels and/or the wheel axle are located in a second angular position behind and subsequently underneath the support beam or in front of it and that the latter is carried by the wheels, so that the device is movable. It is possible to provide separate front and/or rear constructions to this end in the form of a possibly telescopic and lockable profile at the support beam. In order to adjust the wheels to an even lower position in a preferred embodiment, the support member is preferably provided with at least one cross plate or support, which extends flat against the bottom of the support beam in inactive position, suspended from the support beam in a transverse pivot point. With a simple movement of the foot, by means of a cable and/or rod mechanism, possibly supported by means of a pull- or push-spring, or other commonly available means, this cross plate or support, possibly with an extended foot part, is brought to a substantially vertical position or slightly further and it is automatically blocked in this position by the weight of the rest of the device above it.

The first connecting means thus make it possible to move at least the wheels between minimum two extreme positions, namely an upper position in which they make substantially no contact with the ground in use, more particularly upon levering free, lifting shrubs, trees and such, and a lowered and/or advance set or displaced position, in which the wheels are in contact with the ground, so that wheeled transport of the device is possible.

With horizontal (first or second) axle of the support member as used herein is meant an axle which extends substantially horizontally during normal use of the device.

It is advantageous to characterize the device according to the invention in that the first connecting means comprise a plate which extends in a plane substantially perpendicular to the horizontal second axle of the support member and which is provided with circumferential grooves and/or holes and/or recesses and/or construction, the circumferential grooves and/or holes and/or recesses and/or construction corresponding to a number of angular positions of the wheel axle, and in that the wheel axle is provided with a cross plate and/or pen and/or bolt which can be accommodated in the circumferential grooves and/or holes and/or recesses and/or construction, which can be accommodated in the grooves and/or holes and/or recesses and/or construction by means of the operation of a push- and/or pull-spring or other commonly available element with a similar function, between the wheel axle and the support member.

In another preferred embodiment the first connecting means comprise at least one rigid body, which extends between the horizontal first axle of the support member and/or other attachment point of the support member and construction thereon, and the wheel axle, and a locking member connected to the support member which can maintain the wheel axle in the upper position.

The horizontal first axle can be fixed to or adjustably and/or movably connected to the support member. The locking member can for example be a hook, clamping spring or other commonly available member.

Such a preferred embodiment has the advantage of a very simple and quick operation, because the wheel axle can be brought from the upper position to the lower position by the locking member and/or wheel axle, for example by a single movement of the foot which pushes it away, and/or via a cable or rod system pulling or pushing it away, so that the wheel axle is released from the upper position and is brought to the lower position under the influence of gravity.

Preferably the wheels, which are usually located one on each side of the device (a left and a right wheel), are each provided with a separate wheel axle which is suspended in a corresponding wheel suspension construction, connected to the support member. This has the advantage that the wheels of this preferred embodiment can separately take up different positions between the upper and lower positions. This is convenient, for example on curved terrains.

In a method (not claimed here) in a first step the lifting member of the device is driven into the ground until the support beam of the support member contacts the ground, during which the handling member and the wheel axle are respectively located in the penetration position and the upper position, after which in a second step the handling member is moved into a suitable lifting position and the device is rotated around the support beam by exerting a rotational force onto the handling member so that the load is levered free, and after which in a third step the wheel axle is moved from the upper position to the lower position. In the third step a higher position of the support member with the frontal construction is thus achieved.

By locking the wheels in the upper position during the levering, it is achieved that the lever forces exerted by means of the handling member are transferred to the ground via the support beam and not, as in the prior art, via the wheels. As a result it is possible to transfer much higher forces than was the case up to now. If desired the dimensions of the support beam can be chosen in function of the type of ground. For example, it can be advantageous to provide the support beam with an enlarged support plane on the ground, for example when the device is to be used on swampy grounds, or more in general on softer grounds.

The wheels of the device of the invention can also be chosen depending on amongst other the characteristics of the ground. Because of the often heavy and large loads, which can be lifted and moved by means of the device, it is preferred to provide the device with wheels which can be applied on racing carts, although wheels for sports vehicles, recreation vehicles and for road or agriculture vehicles with two or more wheels may also be suitable. Such wheels preferably have a large wheel width / wheel diameter proportion. Because of this large proportion on the one hand a large carrying surface is created, and on the other hand it is achieved that the wheels can easily be moved from the upper to the lower position, without needing an unnecessary large support construction. This further enhances the accessibility of the device to places which are hard to reach.

By using the described device, a method, (not claimed here) makes it possible to easily lift and transport large and heavy loads, if desired only using muscle power. It is clear that the device is preferably propelled by muscle power only, but it is also possible to use motor power for this. This motor power can drive the wheels or the wheel axle by means of a mechanic, hydraulic or any other drive known to the person skilled in the art in a forwards or rearwards motion, possibly while simultaneously imparting a change of position by exerting a mechanic, hydraulic or other movement on the wheel axle or wheels or on the first connecting means. This motor drive can also be used to bring the lifting member, whichever form it has, underneath the load to be moved, possibly together with a movement of the handling member and/or the suspension of the wheels or wheel axle.

It is furthermore possible to expand the device with aid components, such as for example cables, pulleys, winches and other force enlarging means known to the person skilled in the art (so-called jacks) for enlarging the exerted force, holding means for securing a load to the lifting member and/or elsewhere, and other means available to the person skilled in the art, such as for example anchoring a telescopic extendable bar, or other structure to the handling member for taking up as much as possible sideways and up- and downwards pressures. Furthermore, structures for holding the load may be fixed or fixable on the other side of the handling member, adapted or adaptable to the load to be transported, for example a soft grip for holding a tree stem.

Another method (not claimed here) for lifting and transporting loads by means of a device according to the invention comprises a number of steps, the lifting member of the device being shoved in a first step more or less horizontally with the ground underneath the load to be lifted, during which the handling member and the wheel axle are respectively located in a "penetration position", i.e. a position suitable for penetrating with the lifting member underneath the load, and the upper position, after which in a second step the device is tilted on the front end of the lifting member by exerting a rotational force onto the handling member, so that the wheel axle is moved from the upper position to the lower position.

### Brief description of the drawings

The device of the invention will now be further elucidated by means of the following description and the appended drawings, without limiting the scope of the invention.
Figure 1 schematically shows a front view of a device according to the invention.
Figure 2 schematically shows a rear view of a lower part of the device of figure 1.
Figure 3 schematically shows a perspective side view of the second connecting means between the support beam and the handling member.
Figure 4a schematically shows a side view of a possible upper wheel position of the device according to the invention.
Figure 4b schematically shows a side view of a possible lower wheel position of the device according to the invention.

### Modes for carrying out the invention

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention. The reference numbers in the figures refer to the same or similar parts.

Furthermore, the terms first, second, third and the like in the description and in the claims, are used for distinguishing between similar elements and not necessarily for describing a sequential or chronological order. The terms are interchangeable under appropriate circumstances and the embodiments of the invention can operate in other sequences than described or illustrated herein.

Moreover, the terms top, bottom, over, under and the like in the description and the claims are used for descriptive purposes and not necessarily for describing relative positions. The terms so used are interchangeable under appropriate circumstances and that the embodiments of the invention described herein can operate in other orientations than described or illustrated herein.

The term "comprising", used in the claims, should not be interpreted as being restricted to the means listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

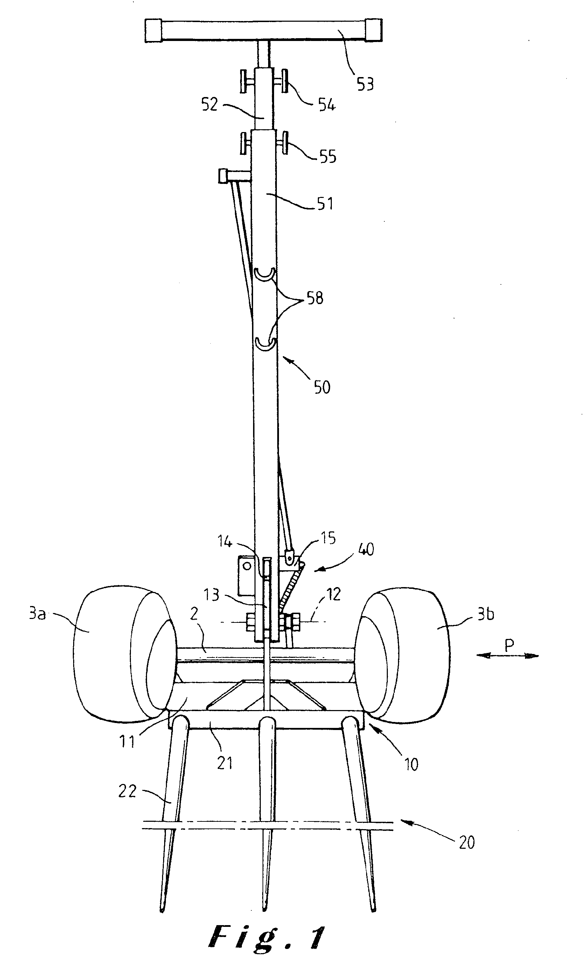

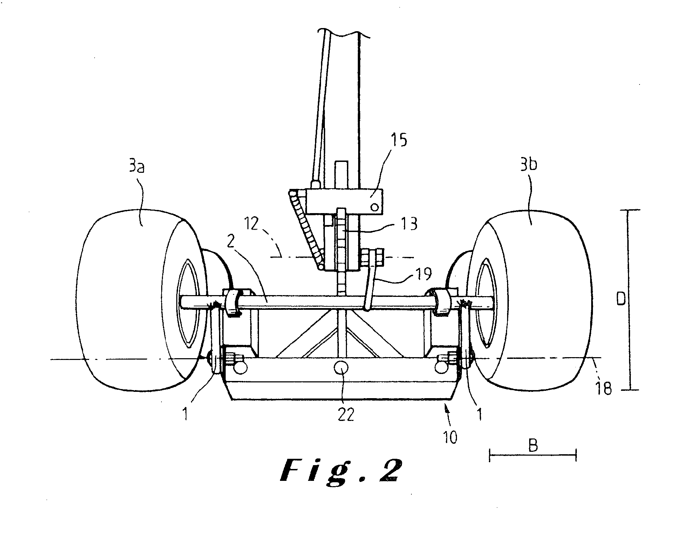

The device according to the invention shown in figure 1 comprises a support member 10, a wheel axle 2 connected to the support member 10 by means of first connecting means 1 (see figure 2) and provided with wheels 3a, 3b on which the device is movable. The support member 10 is up front connected to a lifting member 20 for lifting the load and at the rear connected by means of second connecting means 40 to a handling member 50 for handling the device.

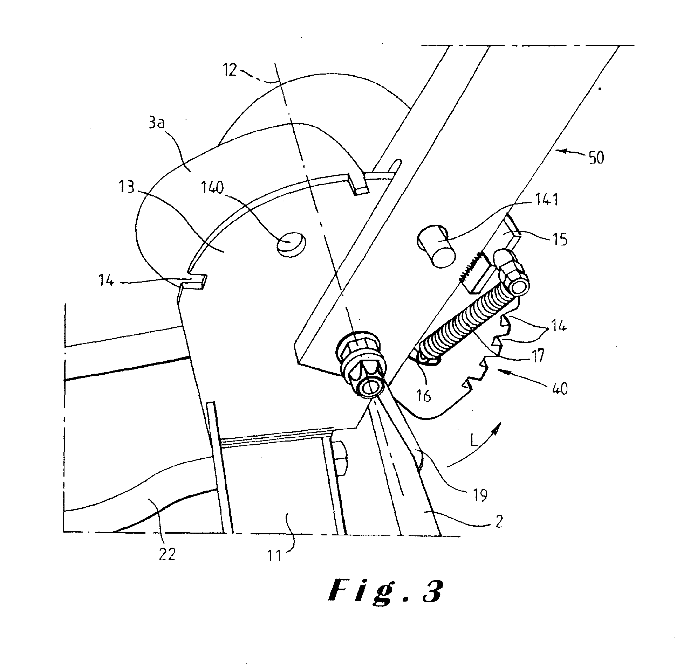

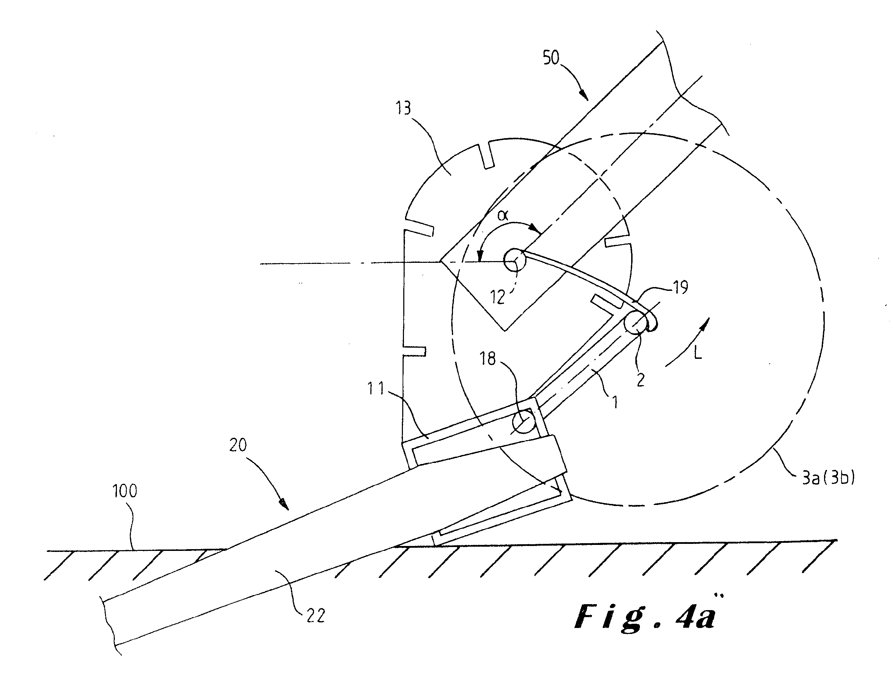

The second connecting means 40 (between support member 10 and handling member 50) of the device shown comprise locking means, which enable the handling member 50 to rotate around, and/or to displace it along a substantially horizontal and transverse second axle 12 of the support member 10, and to lock it in a number of angular positions (defined by the angle α, see figure 4a) each time creating a substantially rigid connection between the handling member 50 and the support member 10. The embodiment shown in figure 3 has second connecting means 40 which comprise a plate 13 extending in a plane substantially perpendicular to the horizontal second axle 12 of the support member 10, with circumferential grooves 14 and/or holes 140, which correspond to a number of angular positions α of the handling member 50. The grooves 14 cooperate with the cross plate 15 for blocking purposes, the holes 140 for example with a locking pen 141. The handling member 50 is provided with a cross plate 15, adapted to be accommodated in the grooves 14, which can be accommodated in the grooves 14 by operation of a pull-spring 17 extending between the handling member 50 and a support point 16 of the support member 10.

In the different angular positions, the handling member 50 encloses an angle α with the plane of the lifting member (as shown in figure 4a), which can vary according to the invention between about 0° (in this position the handling member 50 is more or less located in the plane of and on top of the lifting member 20), via 90° (the handling member 50 being substantially perpendicular to the plane of the lifting member 20), via 180° (the handling member 50 being substantially in extension of the lifting member 20), up to about 270°.

The device shown in figure 1 has a fork-shaped lifting member 20, which mainly comprises a cross beam 21, provided with a number of more or less parallel teeth 22. The support member 10 in the device of figure 1 comprises a tubular support beam 11 of which the axis extends substantially in transverse direction, indicated by arrow P. In the device as shown in figure 1 the cross beam 21 in which the teeth 22 are anchored and the support beam 11 of the support member 10 form part of substantially the same construction, though this is not essential.

The handling member 50 comprises a tubular bar 51, in the free end of which a second bar 52 is accommodated, in which in turn a third bar with handle 53 is accommodated. Possibly further bars can be provided. Bars 52 and 53 are respectively movably mounted in bars 51 and 52 and can be fixed by means of set screws 54 and 55, which can also be pens or bolts, which can cooperate with corresponding holes and/or recesses and/or constructions in the underlying bar. In this way a telescopic extendable handling member is achieved whose total arm length (almost equal to the total length of the bars 51, 52 and 53 in extended position) can run up to 3 m, preferably 5 m, and more. This also ensures that substantial levering forces can be developed without noticeable effort.

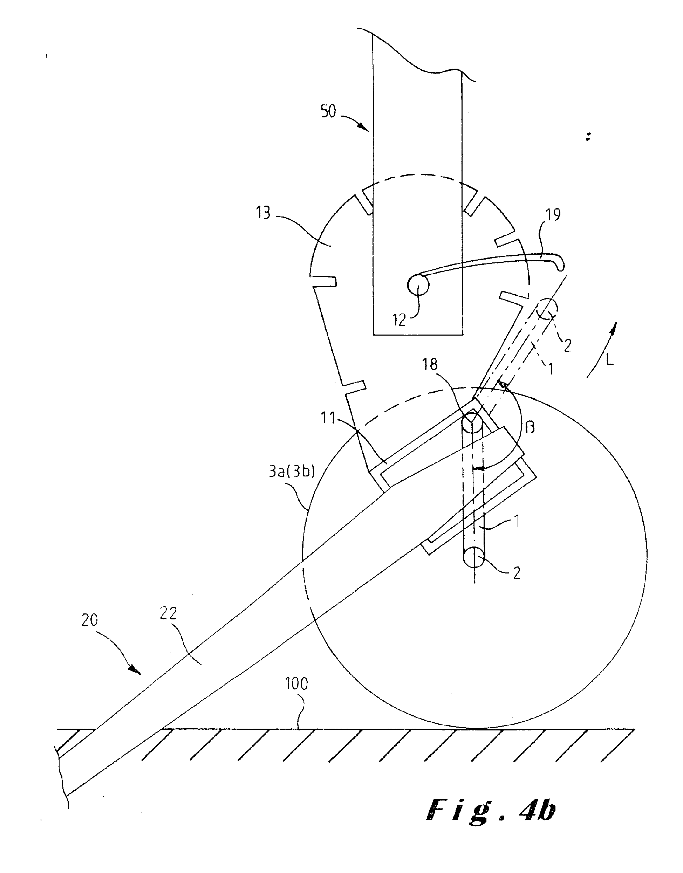

In the embodiment shown in figures 2 and 3 the first connecting means comprise at least one rigid body 1 (in this case two crossbars 1), which extends between a substantially horizontal transverse first axle 18 of the support member 10, in this case the support beam with construction 11, and the wheel axle 2. The first connecting means further comprise a locking member 19 connected to the support member 10 which can maintain the wheel axle in upper position. By pushing out the locking member 19, for example by means of a single movement of the foot, of by means of a cable or rod system, in the direction L indicated on figures 3, 4a and 4b, the wheel axle (or otherwise the wheel axles) 2 are released from the upper position and moved to the lower position under the influence of gravity.

The first connecting means thus make it possible to move at least the wheels 3a and 3b between at least two extreme positions, namely an upper position (as shown in figure 4a) in which they make substantially no contact with the ground 100 during the levering and lifting out step, and a lower position (shown in figure 4b) in which the wheels 3a, 3b are in contact with the ground 100 so that wheeled transport of the device is possible. It is clear that for enabling the wheels 3a and 3b to fall to the lower position under the influence of gravity, it is not only necessary to move the locking member 19 out of the way so that the wheel axle 2 is released, but also to rotate the device by means of the handling member 50 in the direction L in such a way that sufficient space is created underneath the support beam 11 for accommodating the wheels in lower position. In this position the wheel axle 2 needs to be beyond the first axle 18, as shown in figure 4b.

In another preferred embodiment the first connecting means (between support member and wheel axle) can be carried out in substantially the same way as the above described second connecting means 40. It is clear that the description of these is the same as for the second connecting means mentioned above, keeping in mind that wheel axle has to be read instead of handling member and that second axle has to be replaced by first axle. Such an embodiment has the advantage that the wheel axle 2 in the lower position is no longer essentially to the left of the first axle 18, but that more positions can be taken up in which the wheels 3a and 3b contact the ground sooner than the support beam 11. This can have advantages, for example when the lifting member 20 is to be shoved underneath a load on a limited height. By placing the wheel axle 2 in such a position that the wheels 3a and 3b protrude only slightly below the support beam 11, this can be easily moved around in a rolling fashion, with the lifting member 20 only a few mm above the ground.

The wheels 3a and 3b are preferably wheels which are applied on racing carts. Such wheels preferably have a large wheel width / wheel diameter proportion (B/D see figure 2). The B/D proportion can be chosen within wide boundaries. Suitable wheels can for example have a width B of 10-30 cm and more, and a diameter D of 15-30 cm and more.

The device of the invention can amongst others be applied in the following ways. For example in using the device, in this case being provided with a toothed frontal construction, for de- and replanting treelike vegetation which generally have root structures growing in deeper ground layers, with possibly also some root branches extending sideways, in advance an inverted cone, truncated or not, is dug out around the stem of the tree with a narrow long spade. In this way it is achieved that the above mentioned inverted cone-shaped mantle surface is substantially free of pull forces from the root structure and/or ground attachment force. Next, an estimate is made of the weight (ground volume + tree) which has to be lifted, without the pull force of the non-cut roots and the non-sliced ground parts. Although the invention is not limited to this, suitable grounds usually have a weight between about 700 to 1500 kg/m³. By using the device according to the invention, provided with suitable teeth, the surrounding ground remains substantially intact, so that a second hole with if necessary also a cone-shaped mantle surface can be dug out elsewhere.

The handling member 50 of the above described device is rotated from the rest position (around 0° with a rearward wheel position, locked by means of the blocking system 19) to around 135° by first releasing the blocking system 15 and later on reintroducing the blocking system 15. Then the whole device is raised on the front ends of the teeth 22 and possibly intermediate tooth or teeth, located as close as possible to the above mentioned spade cutting line, by means of the handle 53 to an angle of for example 45°, as a result of which the teeth will already partly sink into the ground. Next it is best to check if the whole weight of the construction above the teeth is or is not in extension of the teeth, to avoid friction and blocking forces as much as possible. Then, possibly after a fine tuning of the angular position of the handling member 50 by means of the blocking system 15, it can be achieved for example by short forwards and rearwards movements of the whole device that the ends of the teeth sink deeper into the ground according to the angular position set before. This downwards movement can be enhanced by a human or other weight acting in the direction of the teeth, the weight of the above construction usually being sufficient. It is also possible to exert an additional force onto the support beam 21 or onto hand or foot supports 57 which are provided for this purpose or onto another part of the device. When the support beam 21 hits the ground surface, this will function as support and fixed rotation point between on the one hand the teeth 22 extending into the ground and on the other hand the handling member 50. After this, the handling member 50 is fixed in the most ideal angular position by means of the blocking system 15 for realizing a necessary downwards push- or pull-force (e.g. above or below shoulder height), upon which the first 52 and/or second telescopic handling members are possibly extended and fixed by means of blocking systems 54 and 55.

In order to maintain the tree or object to be lifted in a correct position, use can be made of a loose rope or other fixing means, knotted on the one hand to an anchoring, for example a tree, and on the other hand to the rings 58 on the handling member 51. It is also possible to use a telescopic extendable rod which is connected to a blocking bolt with tightening wing 55 and has a collapsible hook at its free end, with which the load can be held. Another possibility is a soft grip, adapted for holding a tree stem, fixed or movably mounted or removably mounted on the handling member.

Upon exertion of the downwards push- or pull-force, by human force for example via the handle 53 or not, the support member 21 can be further anchored in the underlying ground. If necessary, when the support member 21 sinks too deep as a result of a loose or soft ground structure, additional struts are placed underneath. Upon release of the root clot, possibly from the previously dug-out hole, cone-shaped or not as mentioned above, and rotation of the angular position between teeth and handling member, the dangling wheels at the back will more and more enter into contact with the ground and at last take over the rotation point. In this respect, with the prior art device a very negative lever effect occurs because the rotation point is moved from underneath the support member to further backwards (in the direction of exertion of the force), and possibly even higher than this same support member. After the clot has been levered free, the teeth possibly may have to be replaced in a slightly more horizontal orientation than before, so that the teeth structure can be brought into the middle of the root structure and give a more solid grip, achieving a stable holding of the root clot with the above shrub, tree or tree-like plant. In many cases with the known device it is even not possible to lift the root clot with tree structure on top partly or wholly from the depth or root hole which has been created. The device of the invention is capable of this. To this end, the wheel blocking system 19 is released by a simple movement of the foot, upon which the hook 19 is moved towards the back and the wheel axle is released and moves downwards as a result of gravity, the angular position of the device making sure that the wheels upon lifting the handling member fall beyond the vertical line originating from the fixing point 18 and the support member 21, so that the wheel axle is automatically anchored underneath the support member 21 by the weight of the support member 21 above and the whole construction. This inventive system automatically leads to an extension of the lever, which makes it possible to dig out and/or lift heavier loads than before. After the above mentioned act, the handling member is put in a new position for transport, by means of acts already described above, for lifting the plant or other load and moving it, possibly after partly or wholly collapsing the telescopic handling member 53 and/or 54. After moving the tree/shrub it can be placed with root unit either on the ground or elsewhere in another previously dug-out hole, during which the opposite acts are performed: extending the telescopic handling member 53, as a result of which the support member 21 together with the tooth structure again takes a low position, placing the root clot in the new hole or on the new place, and possibly maneuvering it into the correct replanting position before pulling the tooth structure from underneath the root structure, upon which the handling member 53 is put in a position in which there is substantially no tooth weight or friction with the root clot (e.g. more or less than 180°) by means of acts already described above.

## Claims

1. Device for lifting and transporting loads, for example shrubs, comprising a support member (10), a wheel axle (2) connected to the support member (10) by means of first connecting means (1) and being provided with wheels (3a, 3b) on which the device is movable, a lifting member (20) connected to the front of the support member (10) for lifting the load and a handling member (50) connected to the back of the support member (10) for manipulating the device, the lifting member (20) mainly extending in a plane, the first connecting means (1) enabling the wheel axle (3a, 3b) to be moved between an upper position in which the wheel axle extends above the plane of the lifting member (20) and at least one lower position and comprising first locking means (19) for locking the wheel axle (2) in the upper and lower positions, **characterised in that** in the lower position the wheel axle (2) extends below the plane of the lifting member (20).

2. Device according to claim 1, **characterised in that** the wheel axle (2) is located more towards the front of the lifting member (20) in the lower position than in the upper position.

3. Device according to claim 1 or 2, **characterised in that** the handling member (50) is connected to the support member (10) by means of second connecting means (40) which enable the handling member (50) to rotate around a substantially horizontal second axle (12) of the support member (10) between a number of angular positions, the second connecting means (40) comprising second locking means (40) for locking the handling member (50) it the angular positions upon which each time a substantially rigid connection is created between the handling member (50) and the support member (10).

4. Device according to claim 3, **characterised in that** the second connecting means (40) comprise a plate (13) with circumferential grooves (14) extending in a plane substantially perpendicular to the horizontal second axle (12) of the support member (10), the grooves corresponding to the angular positions of the handling member (50), and **in that** the handling member (50) is provided with a cross plate (15) adapted for being accommodated in the grooves (14), the cross plate (15) being movable into the grooves by operation of a pull-spring (17) extending between the handling member (50) and the cross plate (15).

5. Device according to any one of the previous claims, **characterised in that** the first connecting means (1) enable the wheel axle (2) to rotate around a substantially horizontal first axle (18) of the support member (10) under the influence of gravity.

6. Device according to any one of the previous claims, **characterised in that** the first locking means enable the wheel axle to be locked in a number of angular positions upon which each time a substantially rigid connection is created between the wheel axle (2) and the support member (10).

7. Device according to claim 6, **characterised in that** the first connecting means comprise a plate with circumferential grooves extending in a plane substantially perpendicular to the horizontal first axle of the support member, the grooves corresponding to the angular positions of the handling member, and **in that** the wheel axle is provided with a cross plate adapted for being accommodated in the grooves, the cross plate being movable into the grooves by operation of a pull-spring extending between the wheel axle and the support member.

8. Device according to claim 6, **characterised in that** the first connecting means (1) comprise at least one rigid body (1), which extends between the horizontal first axle (18) of the support member (10) and the wheel axle (2), and that the first locking means comprise a locking member (19) connected to the support member (10) for holding the wheel axle (2) in the upper position.

9. Device according to any one of the claims 1-8, **characterised in that** the lifting member (20) is fork-shaped.

10. Device according to any one of the claims 1-8, **characterised in that** the lifting member (20) is a substantially flat plate.

## Patentansprüche

1. Vorrichtung zum Heben und Transportieren von Lasten, zum Beispiel Sträuchern, umfassend ein Stützelement (10), eine Radachse (2), die mit dem Stützelement (10) durch erste Verbindungsmittel (1) verbunden und mit Rädern (3a, 3b) versehen ist, auf denen die Vorrichtung bewegt werden kann, ein Hebeelement (20), das mit der Vorderseite des Stützelements (10) verbunden ist, um die Last zu heben, und ein Handhabungselement (50), das mit der Rückseite des Stützelements (10) verbunden ist, um die Vorrichtung zu bedienen, wobei sich das Hebeelement (20) hauptsächlich in einer Ebene erstreckt, die ersten Verbindungsmittel (1) bewirken, dass die Radachse (3a, 3b) zwischen einer oberen Position, in der sich die Radachse über die Ebene des Hebeelements (20) erstreckt, und mindestens einer unteren Position bewegt wird, und erste Verriegelungsmittel (19) zum Verriegeln der Radachse (2) in der oberen und der unteren Position umfasst, **dadurch gekennzeichnet, dass** sich die Radachse (2) in der unteren Position unterhalb der Ebene des Hebeelements (20) erstreckt.

2. Vorrichtung nach Anspruch 1, **dadurch gekennzeichnet, dass** die Radachse (2) in der unteren Position mehr zu der Vorderseite des Hebeelements (20) angeordnet ist als in der oberen Position.

3. Vorrichtung nach Anspruch 1 oder 2, **dadurch gekennzeichnet, dass** das Handhabungselement (50) mit dem Stützelement (10) mittels zweiter Verbindungsmittel (40) verbunden ist, die bewirken, dass sich das Handhabungselement (50) um eine im Wesentlichen horizontale zweite Achse (12) des Stützelements (10) zwischen einer Anzahl von Winkelpositionen dreht, wobei die zweiten Verbindungsmittel (40) zweite Verriegelungsmittel (40) zum Verriegeln des Handhabungselements (50) in den Winkelpositionen umfassen, woraufhin jedes Mal eine im Wesentlichen starre Verbindung zwischen dem Handhabungselement (50) und dem Stützelement (10) hergestellt wird.

4. Vorrichtung nach Anspruch 3, **dadurch gekennzeichnet, dass** die zweiten Verbindungsmittel (40) eine Platte (13) mit Umfangsrillen (14) umfassen, die sich in einer Ebene erstrecken, die zu der horizontalen zweiten Achse (12) des Stützelements im Wesentlichen senkrecht ist, wobei die Rillen mit den Winkelpositionen des Handhabungselements (50) übereinstimmen, und **dadurch**, dass das Handhabungselement (50) mit einer Querplatte (15) versehen ist, die ausgelegt ist, um in den Rillen (14) angeordnet zu werden, wobei die Querplatte (15) in die Rillen durch Betätigen einer Rückholfeder (17) bewegt werden kann, die sich zwischen dem Handhabungselement (50) und der Querplatte (15) erstreckt.

5. Vorrichtung nach einem der vorherigen Ansprüche, **dadurch gekennzeichnet, dass** die ersten Verbindungsmittel (1) bewirken, dass sich die Radachse (2) unter dem Einfluss der Schwerkraft um eine im Wesentlichen horizontale erste Achse (18) des Stützelements (10) dreht.

6. Vorrichtung nach einem der vorherigen Ansprüche, **dadurch gekennzeichnet, dass** die ersten Verriegelungsmittel bewirken, dass die Radachse in einer Anzahl von Winkelpositionen verriegelt wird, woraufhin jedes Mal eine im Wesentlichen starre Verbindung zwischen der Radachse (2) und dem Stützelement (10) hergestellt wird.

7. Vorrichtung nach Anspruch 6, **dadurch gekennzeichnet, dass** die ersten Verbindungsmittel eine Platte mit Umfangsrillen umfassen, die sich in einer Ebene erstrecken, die zu der horizontalen ersten Achse des Stützelements im Wesentlichen senkrecht ist, wobei die Rillen mit den Winkelpositionen des Handhabungselements übereinstimmen, und **dadurch**, dass die Radachse mit einer Querplatte versehen ist, die ausgelegt ist, um in den Rillen angeordnet zu werden, wobei die Querplatte in die Rillen durch Betätigen einer Rückholfeder bewegt werden kann, die sich zwischen der Radachse und dem Stützelement erstreckt.

8. Vorrichtung nach Anspruch 6, **dadurch gekennzeichnet, dass** die ersten Verbindungsmittel (1) mindestens einen starren Körper (1) umfassen, der sich zwischen der horizontalen ersten Achse (18) des Stützelements (10) und der Radachse (2) erstreckt, und **dadurch**, dass die ersten Verriegelungsmittel ein Verriegelungsmittel (19) umfassen, das mit dem Stützelement (10) verbunden ist, um die Radachse (2) in der oberen Position zu halten.

9. Vorrichtung nach einem der vorhergehenden Ansprüche 1 bis 8, **dadurch gekennzeichnet, dass** das Hebeelement (20) gabelförmig ist.

10. Vorrichtung nach einem der vorhergehenden Ansprüche 1 bis 8, **dadurch gekennzeichnet, dass** das Hebeelement (20) eine im Wesentlichen flache Platte ist.

## Revendications

1. Dispositif pour le levage et le transport de charges, par exemple, d'arbustes, comprenant un membre de support (10), un essieu (2) connecté au membre de support (10) qui utilise un premier moyen de connexion (1) et pourvu de 5 roues (3a, 3b) sur lesquelles le dispositif est mobile, un membre de levage (20) connecté à la partie avant du membre de support (10) pour soulever la charge et un membre de manipulation (50) connecté à la partie arrière du membre de support (10) pour la manipulation du dispositif, le membre de levage (20) s'étendant principalement sur une surface, le premier moyen de connexion (1) permettant que l'essieu (3a, 3b) se déplace entre une position supérieure, dans laquelle l'essieu s'étend sur la surface du premier moyen de fermeture (19) pour fermer l'essieu (2) dans les positions supérieure et inférieure, **caractérisé en ce que** dans la position inférieure, l'essieu (2) s'étend sous la surface du membre de levage (20).

2. Dispositif conformément à la revendication 1, **caractérisé en ce que** l'essieu (2) est situé plus vers la partie avant du membre de levage (20), dans la position inférieure, que vers la position supérieure.

3. Dispositif conformément aux revendications 1 ou 2, **caractérisé en ce que** le membre de manipulation (50) est connecté au membre de support (10) à l'aide d'un deuxième moyen de connexion (40) qui permet que le membre de manipulation (50) tourne autour d'un deuxième axe principalement horizontal (12) du membre de support (10) entre un nombre de positions angulaires, le deuxième moyen de connexion (40) comprenant un deuxième moyen de fermeture (40) pour fermer le membre de manipulation (50) aux positions angulaires sur lesquelles, à chaque fois, est créée une connexion rigide entre le membre de manipulation (50) et le membre de support (10).

4. Dispositif conformément à la revendication 3, **caractérisé en ce que** le deuxième moyen de connexion (40) comprend une plaque (13) avec des rainures circonférentielles (14) s'étendant sur une surface principalement perpendiculaire au deuxième angle horizontal (12) du membre de support (10), les rainures correspondant aux positions angulaires du membre de manipulation (50) et **en ce que** le membre de manipulation (50) est pourvu d'une plaque croisée (15) adaptée pour être logée dans les rainures (14), la plaque croisée (15) étant mobile dans les rainures moyennant un ressort de rappel (17) qui s'étend entre le membre de manipulation (50) et la plaque croisée (15).

5. Dispositif conformément à l'une quelconque des revendications précédentes, **caractérisé en ce que** le premier moyen de connexion (19) permet que l'essieu (2) tourne autour d'un premier axe (18) principalement horizontal du membre de support (10), sous l'influence de la gravité.

6. Dispositif conformément à l'une quelconque des revendications précédentes, **caractérisé en ce que** le premier moyen de fermeture permet que l'essieu soit fermé dans un certain nombre de positions angulaires sur lesquelles est créée, à chaque fois, une connexion rigide entre l'essieu (2) et le membre de support (10). ]

7. Dispositif conformément à la revendication 6, **caractérisé en ce que** le premier moyen de connexion comprend une plaque avec des rainures circonférentielles qui s'étendent sur une surface principalement perpendiculaire par rapport au premier angle horizontal du membre de support, les rainures correspondant aux positions angulaires du membre de manipulation et **en ce que** l'essieu est pourvu d'une plaque croisée adaptée pour être logée dans les rainures, la plaque croisée étant mobile dans les rainures à l'aide d'un ressort de rappel qui s'étend entre l'essieu et le membre de support.

8. Dispositif conformément à la revendication 6, **caractérisé en ce que** le premier moyen de connexion (1) comprend, au moins, un corps rigide (1), qui s'étend entre le premier axe horizontal (18) du membre de support (10) et l'essieu (2) et **en ce que** le premier moyen de fermeture comprend un membre de fermeture (19) connecté au membre de support (10) pour maintenir l'essieu (2) dans sa position supérieure.

9. Dispositif selon l'une quelconque des revendications 1 - 8, **caractérisé en ce que** le membre de levage (20) présente une forme de fourche.

10. Dispositif selon l'une quelconque des revendications 1 - 8, **caractérisé en ce que** le membre de levage (20) présente une forme considérablement plate.
